Europäisches Patentamt

European Patent Office

Office européen des brevets

(19)

(11) Numéro de publication : **0 057 122**
**B1**

(12) **FASCICULE DE BREVET EUROPÉEN**

(45) Date de publication du fascicule du brevet :
15.05.85

(21) Numéro de dépôt : 82400056.6

(22) Date de dépôt : 13.01.82

(51) Int. Cl.⁴ : **A 01 F 15/14**

(54) **Dispositif de liage pour presses à balles cylindriques.**

(30) Priorité : 22.01.81 FR 8101138
06.03.81 FR 8104466

(43) Date de publication de la demande :
04.08.82 Bulletin 82/31

(45) Mention de la délivrance du brevet :
15.05.85 Bulletin 85/20

(84) Etats contractants désignés :
DE FR GB IT NL

(56) Documents cités :
FR-A- 2 278 242
FR-A- 2 414 295
US-A- 4 023 479
US-A- 4 024 804
US-A- 4 094 239
US-A- 4 150 614

(73) Titulaire : **JOHN DEERE (Société Anonyme)**
**8, Quai de la Madeleine**
**F-45000 Orléans (FR)**

(72) Inventeur : **Viaud, Jean**
**Chargey-les-Gray**
**F-70100 Gray (FR)**
Inventeur : **Coefflc, Jean-Pierre**
**625 North Court**
**Ottumwa Iowa 52501 (US)**
Inventeur : **Berthet, Jean-Paul**
**11, Faubourg Roch**
**F-70100 Gray (FR)**

(74) Mandataire : **Pruvost, Marc Henri et al**
**Cabinet ORES 6, Avenue de Messine**
**F-75008 Paris (FR)**

Jouve, 18, rue St-Denis, 75001 Paris, France

**Description**

La présente invention concerne les presses à balles cylindriques.

Ces presses sont d'un type général bien connu et comprennent des jeux de bandes ou courroies qui, par leur déplacement, forment par enroulement à l'intérieur d'une chambre ménagée dans le corps de la presse une balle de forme générale cylindrique à partir de produits de récolte, notamment de fourrage ou de foin, ramassés sur le champ au cours de la progression de la presse. Il est usuel, avant le déchargement de la balle cylindrique à partir de la presse, d'assurer son liage.

Cette opération, qui est réalisée à l'aide d'un lien constitué généralement par une ficelle, est effectuée de façon connue au moyen d'un dispositif comprenant un bras guide-ficelle pivotant ou un organe analogue déplacé selon un mouvement transversal au sens de marche de la presse devant l'orifice d'entrée des produits récoltés à partir du champ. La ficelle, qui provient d'une réserve appropriée, est guidée par ce bras en passant généralement à l'intérieur d'un tube et son extrémité est saisie par les produits de récolte constituant la balle à la fin de l'opération de formation de celle-ci, de sorte qu'elle est enroulée autour de cette balle sous l'effet de la rotation de cette dernière entre les bandes ou courroies et que ce mouvement d'enroulement se conjugue à une répartition des spires de ficelle ainsi formées sur la longueur de la balle, du fait du mouvement de balayage transversal du bras.

Différents types de dispositifs (demande de brevet allemand n° 2 640 563) ont été proposés pour la commande du mouvement de balayage transversal du bras guide-ficelle pivotant. Il est en effet nécessaire, dans ce cas, de maintenir le bras dans une position d'arrêt ou de repos qui correspond généralement à sa position de fin de course de liage, puis de l'amener rapidement dans une position de départ vers un côté de la machine, et ensuite d'assurer un balayage transversal lent en face de l'orifice ou de la fente d'entrée des produits de récolte dans la presse pour réaliser un liage correct de la balle.

Suivant la demande de brevet allemand précitée, le mouvement du bras jusqu'à sa position de départ est assuré à la main par le conducteur de la machine et le mouvement de balayage de ce bras pendant le liage est produit par un système de came agissant sur un levier pivotant combiné au bras, le déplacement de la came étant assuré par la ficelle de liage elle-même, qui s'enroule sur une poulie d'entraînement. Tout d'abord, le fonctionnement requiert une intervention manuelle de déplacement du bras qu'il est désirable d'éviter. En outre, l'emploi d'une came est lié à une évolution du mouvement de balayage définie par le profil fixe de la came.

Une autre solution à ce problème a été proposée dans le brevet U-S-4 150 614, dans lequel le bras guide-ficelle est soumis en position de repos à l'action d'un ressort qui tend à le ramener rapidement à sa position de départ quand le diamètre de balle requis est atteint, des moyens libérant alors ce bras. Selon ce brevet antérieur, il est toutefois prévu pour assurer la commande positive du bras un cylindre hydraulique associé à une valve, ce qui exige sur la presse l'utilisation de moyens hydrauliques devant être alimentés à partir du tracteur auquel la presse est attelée et de moyens de commande de la valve, avec les inconvénients que cela peut présenter. En outre, un système de verrouillage est prévu pour retenir le bras en position de repos en agissant par accrochage sur ce bras lui-même.

Le but de l'invention est de remédier aux inconvénients des agencements existants et d'obtenir le résultat désiré par des moyens simples, robustes et d'un fonctionnement sûr.

L'invention concerne à cet effet un dispositif de liage pour presses à balles cylindriques, du type comprenant un bras guide-ficelle monté de façon pivotante sur la presse de façon à pouvoir effectuer un mouvement de balayage devant l'orifice d'entrée des produits de récolte dans la presse, ce bras étant alimenté en ficelle à partir d'une réserve de ficelle et guidant celle-ci jusque devant cet orifice d'entrée, ledit bras étant retenu en position de repos pendant la formation de la balle dans la chambre de la presse et étant soumis à l'action d'un organe élastique de rappel en position de départ par un mouvement rapide lors du déclenchement de l'opération de liage, des organes d'entraînement étant prévus pour déplacer ce bras en un lent mouvement de balayage transversal devant cet orifice d'entrée pour la course de liage, des moyens assurant l'actionnement et l'arrêt de ces organes d'entraînement, caractérisé en ce que ce bras est relié par un accouplement à effet unidirectionnel débrayable à ces organes d'entraînement, qui sont irréversibles, le maintien dudit bras en position de repos en fin de course étant assuré par l'irréversibilité desdits organes d'entraînement, tandis que le déclenchement du mouvement rapide du bras de sa position de repos à sa position de départ est provoqué par l'actionnement d'un organe de débrayage ou de déverrouillage de l'accouplement débrayable.

De façon avantageuse, l'accouplement à effet unidirectionnel peut être constitué par un moyeu débrayable. L'organe de déverrouillage peut alors être combiné à ce moyeu débrayable.

Ainsi, lorsque le moyeu est débrayé ou déverrouillé, le bras est amené par un mouvement rapide dans sa position de départ sous l'effet de l'organe élastique, tandis que, lorsque le bras guide-ficelle se trouve en position de départ et lorsque les moyens d'entraînement sont actionnés, le moyeu se réenclenche automatiquement pour provoquer le lent mouvement transversal requis du bras guide-ficelle.

Les moyens de déverrouillage de l'accouplement ou du moyeu peuvent être à actionnement manuel ou automatique. Toutefois, suivant un mode de réalisation paraissant avantageux, des moyens sont prévus pour relier l'organe de déverrouillage du moyeu à un organe détecteur actionné quand la formation de la balle cylindrique est en principe terminé, afin de déverrouiller ce moyeu débrayable et de permettre alors le rappel rapide du bras à sa position de départ.

Cet organe détecteur peut être constitué de façon connue par un élément disposé dans le trajet d'un organe déplacé en fonction de l'augmentation de diamètre de la balle cylindrique, notamment d'un organe relié à l'un des rouleaux de guidage des bandes ou courroies, déplacé lors de l'augmentation de diamètre de la balle cylindrique. Il est alors actionné quand cette balle atteint sensiblement son diamètre maximum, pour déclencher le déverrouillage.

Suivant une réalisation paraissant judicieuse, le moyeu débrayable comprend un corps relié au bras guide-ficelle dans lequel est tourillonné l'arbre d'entraînement du bras et renfermant un premier accouplement comprenant des galets ou rouleaux retenus dans une cage entre ce corps et une partie non circulaire de l'arbre, et une roue-libre dont un élément est relié rigidement à l'organe de déverrouillage, la cage du premier accouplement étant solidaire de l'autre élément de la roue-libre et pouvant se déplacer angulairement sous l'action de l'organe de déverrouillage pour libérer les galets ou rouleaux de la partie non circulaire de l'arbre.

Suivant une autre particularité, les organes d'entraînement peuvent être constitués par un mécanisme tel qu'un réducteur comprenant un arbre d'entrée et un arbre de sortie relié à l'accouplement, cet arbre d'entrée portant une poulie ou un organe analogue sur lequel est enroulée la ficelle destinée au liage, entre la boîte à ficelle servant de réserve et le bras guide-ficelle.

Il semble toutefois avantageux, dans certains cas, de réaliser l'entraînement provoquant le mouvement de balayage du bras guide-ficelle non pas par la traction exercée par la ficelle de liage, mais par des moyens fournissant un entraînement positif.

Ainsi, suivant une variante de réalisation, ces organes d'entraînement comprennent, en combinaison, un moteur électrique et un réducteur de type irréversible interposé entre ce moteur électrique et l'accouplement unidirectionnel ou le moyeu débrayable.

Le réducteur peut comporter, sur l'arbre de sortie du moteur électrique ou sur un arbre entraîné par celui-ci, une came attaquant un levier monté à rotation sur l'arbre de réducteur avec interposition d'un premier accouplement formant roue-libre, cet arbre étant tourillonné dans un support fixe avec interposition d'un second accouplement formant roue-libre, assurant un blocage dans le même sens que le premier accouplement, de telle sorte que le déplacement par pivotement en va-et-vient du levier sous l'effet de la came provoque un entraînement pas à pas à faible vitesse de l'arbre du réducteur, toute rotation en arrière de cet arbre du réducteur, toute rotation en arrière de cet arbre étant empêchée par le second accouplement lors du mouvement de retour du levier.

Suivant une autre particularité, il est prévu, dans le circuit électrique d'alimentation du moteur électrique à partir d'une source d'énergie, un contacteur de mise en circuit interposé dans la trajectoire du bras guide-ficelle et actionné par ce bras quand celui-ci parvient dans sa position de départ après avoir été libéré, ce contacteur étant monté dans le circuit d'un relais dont les contacts sont intercalés dans le circuit d'alimentation du moteur électrique, et un contacteur de mise hors circuit également interposé dans la trajectoire du bras guide-ficelle, prévu au voisinage de la position de repos de ce bras et actionné quand ledit bras parvient dans cette position de repos pour ouvrir le circuit d'alimentation du moteur électrique.

Suivant une autre variante de réalisation, les moyens d'entraînement peuvent comporter un arbre relié cinématiquement à l'arbre de prise de force du tracteur auquel la presse est attelée ou cet arbre de prise de force lui-même, un réducteur de type irréversible monté entre cet arbre et cet accouplement à effet unidirectionnel, et des moyens pour désaccoupler ce réducteur de cet arbre quand le bras guide-ficelle se trouve en position de repos.

Dans ce cas, le dispositif peut comporter une came montée sur l'arbre précité et un levier monté de façon pivotante sur l'arbre du réducteur par l'intermédiaire d'un premier accouplement formant roue-libre, cet arbre du réducteur étant ici encore tourillonné dans un support fixe avec interposition d'un second accouplement formant roue-libre monté dans le même sens que le premier, afin que le pivotement du levier sous l'effet de la came provoque par l'intermédiaire du premier accouplement un lent mouvement de rotation pas à pas de l'arbre de sortie, toute rotation en sens opposé étant empêchée par le second accouplement lors du mouvement de retour du levier.

Une surface de friction est prévue avantageusement entre la came et la partie du levier qui est attaquée par celle-ci. Toutefois, afin d'éviter un entraînement en rotation de l'arbre de sortie du réducteur et par conséquence de l'accouplement à effet unidirectionnel relié à celui-ci lorsque le bras guide-ficelle se trouve en position de repos, il est prévu de préférence sur la presse une butée coopérant avec le levier d'actionnement du réducteur pour maintenir sa surface de friction à l'écart de la came, cette butée étant reliée par ailleurs au bras guide-ficelle ou à un organe associé à celui-ci de façon à s'effacer quand ce bras guide-ficelle est libéré pour parvenir à sa position de départ. Suivant une réalisation possible, la butée est constituée par un levier coudé dont un bras coopère avec le levier d'accouplement du réducteur et dont l'autre bras est attaqué par le bras guide-ficelle quand ce dernier se trouve dans sa position de repos. Un ressort est conjugué judicieusement à ce levier coudé pour écarter son bras formant butée du levier relié au réducteur quand le bras guide-ficelle est libéré pour parvenir à sa position de départ.

Suivant une autre particularité encore, il est prévu vers l'extrémité de l'orifice d'entrée des produits de récolte dans la presse correspondant à la position de repos du bras guide-ficelle une portée sur laquelle peut s'appliquer un couteau destiné à sectionner et à retenir l'extrémité correspondante de la ficelle, ce couteau étant actionné par le bras guide-ficelle quand celui-ci arrive sensiblement en fin de course.

Ce couteau peut être relié par une tringle d'accouplement ou un élément analogue à un levier interposé dans le trajet du bras guide-ficelle.

L'invention concerne encore les presses à balles cylindriques ou rondes équipées d'un dispositif de liage tel que défini ci-avant.

La description qui va suivre faite en regard des dessins annexés, donnés à titre non limitatif, permettra de mieux comprendre l'invention.

La figure 1 est une vue de profil d'une presse à balles cylindriques équipée du dispositif de liage suivant un mode de réalisation de l'invention.

La figure 2 est une vue en plan de ce dispositif de liage.

Les figures 3 et 4 sont des vues partielles à plus grande échelle, montrant des organes de coupe et de retenue de la ficelle.

La figure 5 est une vue en coupe verticale d'un moyeu débrayable suivant un mode de réalisation préférentiel de l'invention.

La figure 6 est une vue en coupe transversale par la ligne VI-VI en fig. 5.

La figure 7 est une vue partielle schématique de profil d'un autre mode de réalisation possible.

La figure 8 est une vue schématique en perspective d'une réalisation de réducteur irréversible utilisable dans le cas de la fig. 7.

La figure 9 est un schéma de circuit électrique correspondant à l'ensemble que montre la fig. 7.

La figure 10 est une vue schématique partielle d'une variante de réalisation avec entraînement du bras guide-ficelle à partir de l'arbre de prise de force du tracteur.

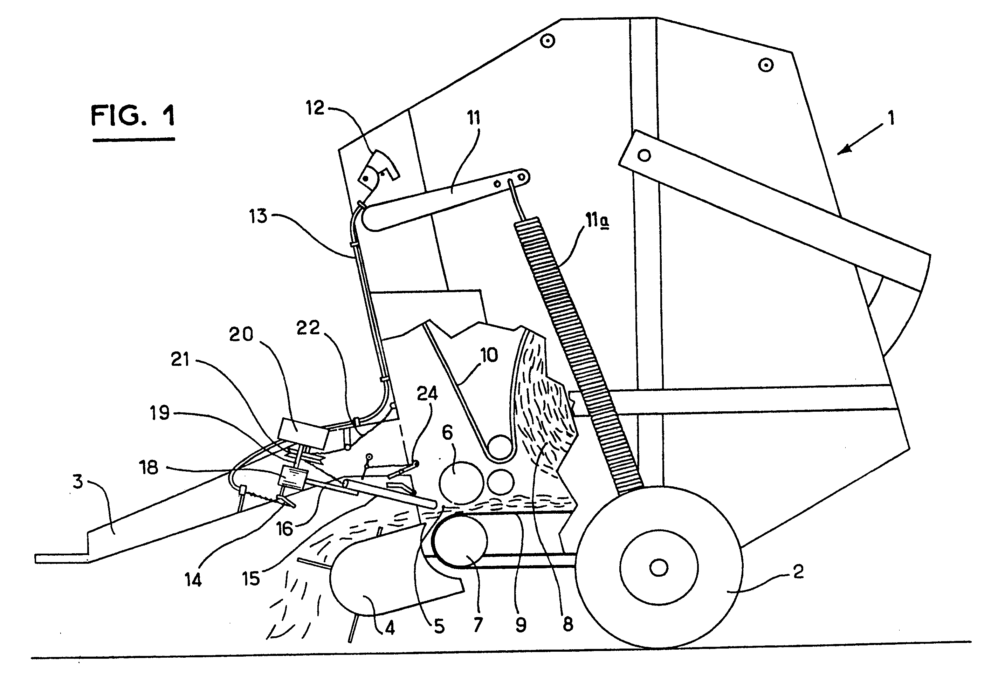

On a représenté sur la fig. 1 une presse à balles cylindriques de type classique, comportant un corps 1 supporté par un châssis équipé de roues 2, la presse étant destinée à être attelée à un tracteur au moyen d'un timon 3. Un ramasseur 4 est prévu de façon classique à la partie avant du corps 1 de la presse, de manière à ramasser les produits de récolte, tels que du fourrage, sur le champ et à les amener à un orifice 5 ménagé entre des rouleaux 6, 7 pour leur pénétration dans une chambre prévue à l'intérieur 1 du corps de la presse et dans laquelle une balle cylindrique 8 se forme par enroulement de la nappe de produits entre des bandes ou courroies entraînées de façon positive dans le sens approprié. On a indiqué schématiquement en 9 sur la fig. 1 les bandes ou courroies inférieures et en 10 les bandes ou courroies supérieures, étant entendu que des jeux de bandes ou courroies associées à des rouleaux de renvoi sont prévus de manière usuelle pour ménager la chambre d'enroulement des produits de récolte en vue de la formation de la balle cylindrique.

Dans les presses à balles cylindriques de ce genre, certains des rouleaux sont déplaçables pour tenir compte de l'augmentation de diamètre de la balle au cours de sa formation et on a indiqué en 11, sur la fig. 1, un bras de levier qui est sollicité par un ressort 11a vers une position inférieure, qu'il occupe au début de la formation de la balle, et qui se déplace par pivotement dans le sens anti-horaire au fur et à mesure que la balle augmente de diamètre.

Suivant la fig. 1, un détecteur formé par un levier de déclenchement est prévu dans le trajet de pivotement de ce levier 11, de manière à être actionné sensiblement lorsque la balle atteint son diamètre maximum. Ce levier 12 est relié ici par un câble Bowden 13 à un bras 14, dont le rôle sera indiqué plus loin.

D'une manière en soi connue, un bras guide-ficelle 15 est monté à pivotement sur le châssis de la machine de manière à pouvoir subir un déplacement transversal de balayage sensiblement horizontal, au cours duquel l'extrémité libre du bras 15 décrit une trajectoire parallèle à l'orifice 5 d'entrée des produits de récolte dans la machine. Ce bras 15 est constitué de façon en soi usuelle par un tube qui est fixé sur un support plat 16.

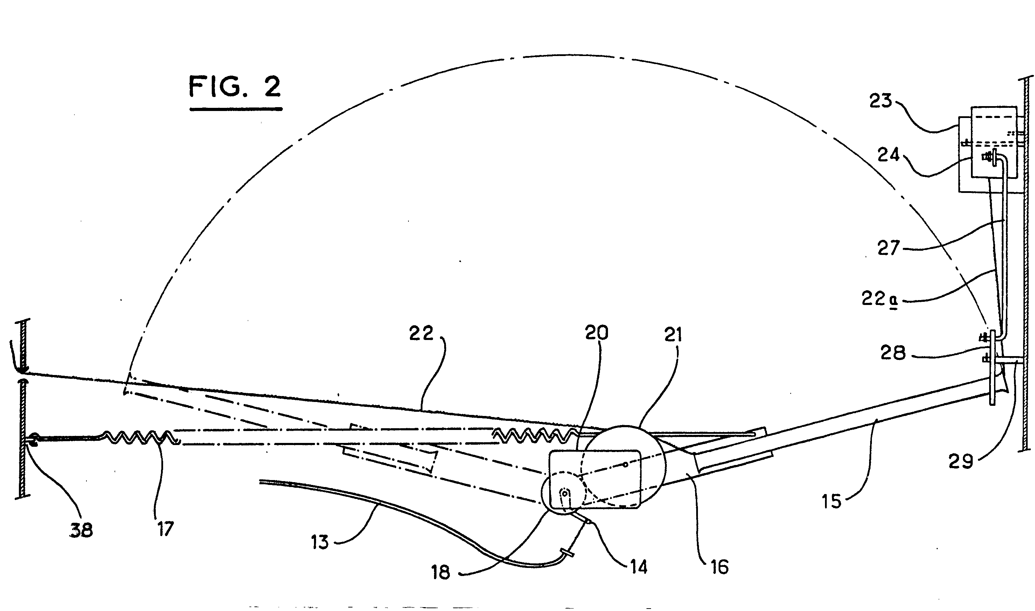

Ce mode de réalisation du dispositif qui fait l'objet de l'invention sera décrit plus en détail en regard des fig. 1 et 2.

Suivant le mode de réalisation considéré, le support 16 du bras tubulaire 15 est relié par un ressort 17 (fig. 2) à un point fixe 38 du châssis de la machine, de sorte qu'il est sollicité normalement par ce ressort dans le sens anti-horaire (quand on regarde la fig. 2) jusqu'à la position indiquée en traits mixtes.

Le support 16 est relié dans le cas présent à un élément d'un moyeu débrayable à effet unidirectionnel 18, qui est verrouillé par des moyens non représentés dans une position dans laquelle le bras 15 occupe la position représentée en traits pleins sur la Fig. 2. Toutefois, ce moyeu débrayabe peut être déverrouillé au moyen du levier 14, et il est monté de telle sorte que le bras 15 puisse alors subir un libre déplacement angulaire dans le sens anti-horaire, pour passer de la position illustrée en traits pleins à celle représentée en traits mixtes sur la Fig. 2.

Le second élément du moyeu débrayabe 18 est calé sur l'arbre de sortie 19 d'un réducteur 20 dont l'arbre d'entrée porte une poulie 21. D'une manière en soi connue, l'élément du moyeu débrayable à effet unidirectionnel 18 relié au bras 15, 16 peut tourner librement dans un sens par rapport à l'élément relié à l'arbre 19, mais il est entraîné positivement par cet arbre 19 quand celui-ci tourne dans le sens horaire quand on regarde la Fig. 2.

Comme indiqué sur les dessins, la ficelle de liage 22, qui provient d'une boîte à ficelle (non représentée) prévue de façon en soi connue sur la presse, est enroulée au moins une fois autour de la poulie 21 et traverse ensuite le bras guide-ficelle tubulaire 15, son extrémité étant indiquée en 22a sur la Fig. 2.

On décrira maintenant les organes de coupe et de retenue de la ficelle, servant à maintenir celle-ci quand le bras 15, 16 occupe sa position de repos.

Ces organes comprennent une portée ou enclume 23 fixée sur la presse au voisinage de l'orifice d'entrée des produits de récolte, du côté correspondant à la position de repos du bras guide-ficelle 15, 16.

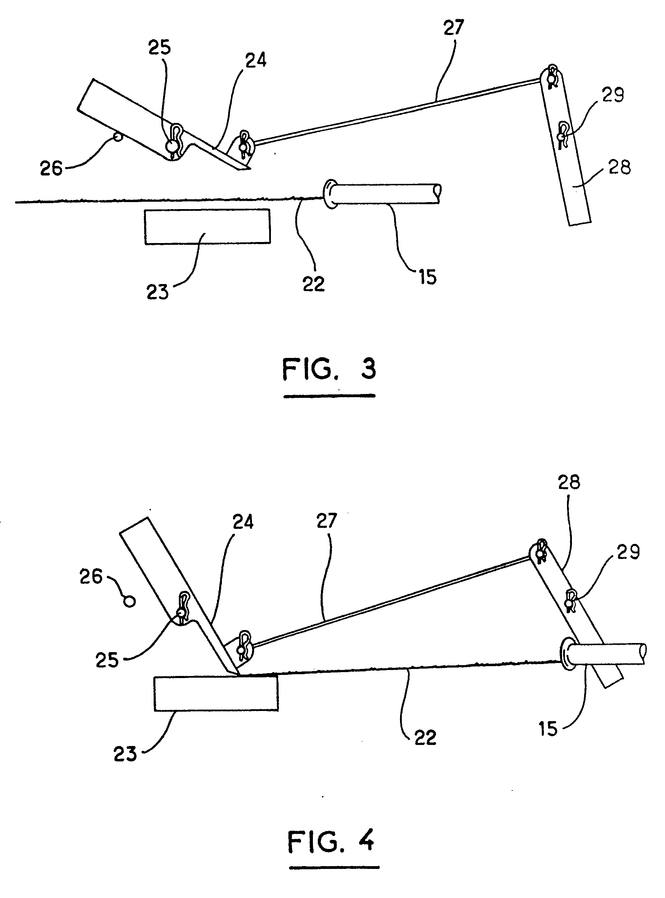

Un couteau 24 destiné à coopérer avec cette enclume 23 est monté à pivotement autour d'un axe fixe 25 (Fig. 3 et 4). Dans sa position de repos dans laquelle il est écarté de l'enclume 23 (Fig. 3), ce couteau repose par sa partie arrière contre une butée 26. La partie avant du couteau est reliée par une tringle d'accouplement 27 à une extrémité d'un levier à deux bras 28 monté à pivotement vers son milieu autour d'un axe 29.

On décrira maintenant le fonctionnement du dispositif de liage suivant l'invention :

On sait qu'à la fin de l'opération de formation de la balle cylindrique, celle-ci doit être liée habituellement à l'aide d'une ficelle sur toute sa longueur, la ficelle formant lien étant prélevée à la réserve prévue sur la machine par le mouvement de rotation de la balle quand son extrémité a été saisie par celle-ci, tandis que le mouvement de balayage du bras guide-ficelle assure l'obtention d'un liage hélicoïdal autour de la balle.

On supposera que la balle est en cours de formation et que le bras guide-ficelle 15, 16 occupe la position représentée en traits pleins sur la Fig. 2. Dans cette position, le bras 15 agit sur le levier 28 pour maintenir le couteau 24 contre l'enclume 23 dans la position visible sur la Fig. 4, ce qui retient l'extrémité de la ficelle entre ce couteau et cette enclume.

Vers la fin de l'opération de formation de la balle, quand celle-ci atteint son diamètre maximum, le levier 11 agit sur le détecteur 12 pour provoquer, par l'intermédiaire du câble 13, le déplacement du levier de déverrouillage 14 associé au moyeu débrayable 18. Du fait de ce déverrouillage, le ressort 17 agit par traction sur le bras 15, 16 pour le faire pivoter rapidement dans le sens anti-horaire et pour l'amener dans la position indiquée en traits mixtes sur la Fig. 2. Dès que le bras guide-ficelle 15, 16 a quitté le levier 28, celui-ci bascule dans le sens horaire en regardant les Fig. 3, 4 pour écarter le couteau 24 de l'enclume 23, ce qui libère la ficelle. Ainsi, quand le bras 15, 16 est parvenu par un mouvement de pivotement rapide sous l'effet du ressort 17 dans la position indiquée en traits mixtes sur la Fig. 2, la ficelle pend librement devant l'orifice 5 d'entrée des produits de récolte dans la presse. Son extrémité est alors saisie par ces produits et entraînée, de sorte qu'une traction s'exerce sur cette ficelle pour tendre à la prélever afin d'assurer le liage, d'une manière en soi connue.

Du fait de cette traction, la ficelle 22, enroulée sur la poulie 21, fait tourner cette dernière et ainsi l'arbre d'entrée du réducteur 20. Il en résulte, par l'intermédiaire de l'accouplement débrayable 18, un entraînement positif à faible vitesse du bras guide-ficelle 15, 16, qui va ainsi exécuter un lent mouvement de balayage transversal pour revenir de la position indiquée en traits mixtes vers la position indiquée en traits pleins sur la Fig. 2. Au cours de ce mouvement de balayage transversal la ficelle va ainsi former des spires sur la longueur de la balle cylindrique, d'une manière en soi connue.

Vers la fin de son mouvement de pivotement, le bras 15, 16 vient buter contre le levier 28 et le fait basculer dans le sens anti-horaire (en regardant les Fig. 3 et 4), ce qui, par l'intermédiaire de la tringle d'accouplement 27, provoque le pivotement du couteau 24 autour de son axe 25, ce couteau venant ainsi sectionner la ficelle 22, qui est parvenue entre l'enclume 23 et le couteau 24 par suite de son guidage par le bras 15, 16, en maintenant son extrémité contre l'enclume 23 de la manière visible sur la Fig. 4.

Le dispositif est ainsi ramené à sa position de repos dans laquelle il va demeurer jusqu'au liage de la balle suivante.

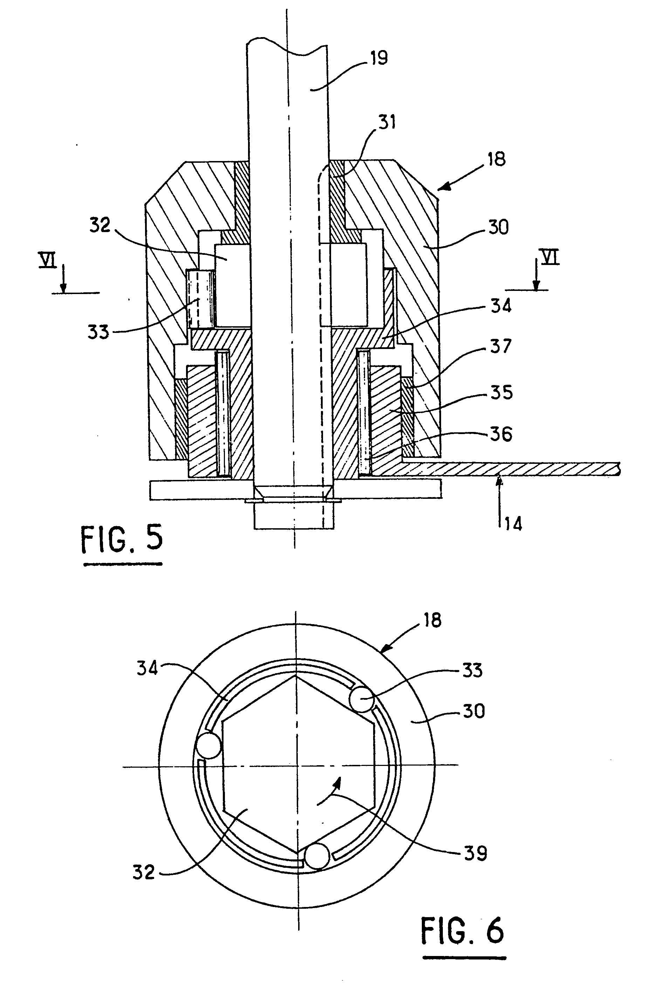

Sur les Fig. 5 et 6, qui montrent de façon plus détaillée un agencement possible du moyeu débrayable 18, on a indiqué en 19 l'arbre qui constitue l'arbre de sortie du réducteur 20.

On a montré en 30 le corps extérieur du moyeu débrayable, qui porte le support 16 du bras tubulaire 15. L'arbre 19 est tourillonné dans ce corps 30 par un palier lisse 31. Il présente une partie 32 de forme hexagonale, disposée dans la moitié supérieure du corps 30. Des galets ou rouleaux 33 sont montés entre les faces de cette partie 32 de l'arbre et la périphérie intérieure du corps 30, et ils sont retenus par une cage 34.

Comme visible sur la Fig. 5, cette cage 34 se prolonge vers le bas dans la partie inférieure du corps 30 pour constituer l'élément intérieur d'une roue-libre comportant une bague extérieure 35 dont est solidaire le levier de verrouillage 14 et des rouleaux ou aiguilles 36, la bague 35 étant tourillonnée dans le corps 30 par un palier lisse 37.

On comprend aisément à la lecture de la description qui précède et à l'examen des dessins que, dans la condition visible sur la Fig. 6, dans laquelle les rouleaux 33 sont coincés entre les faces de la partie 32 de l'arbre 19 et la surface intérieure du corps 30, la rotation de l'arbre 19 dans le sens indiqué par la flèche 39 va assurer l'entraînement en rotation dans le même sens du corps 30 et ainsi du bras guide-ficelle. Par contre, un déplacement angulaire de la cage 34 va amener les rouleaux 33 dans une position permettant le libre retour du bras tubulaire à sa position de départ sous l'effet du ressort 17.

La roue-libre inférieure 34, 35, 36 de ce moyeu débrayable permet au levier de verrouillage 14 de garder la même position dans l'espace, étant donné qu'il n'est pas entraîné dans le sens normal de rotation de l'arbre 19, tout en permettant une commande de la cage pour le retour du bras guide-ficelle à sa position de départ. Le réenclenchement du moyeu débrayable s'effectue alors de façon automatique par la rotation de l'arbre 19, qui « rattrape » les galets ou rouleaux 33.

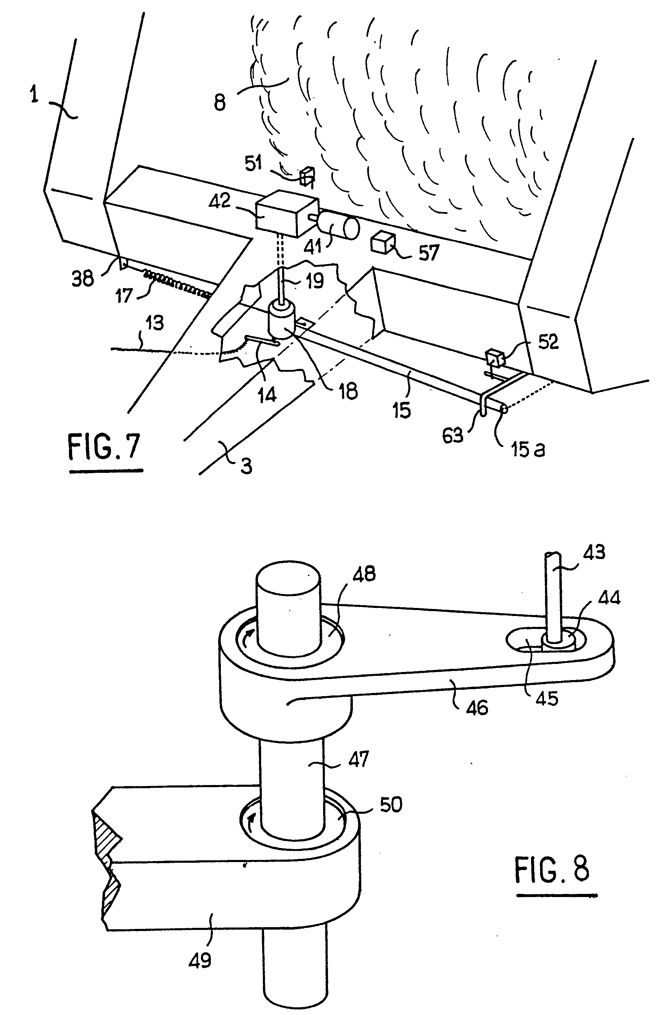

Si l'on se reporte maintenant à la Fig. 7, on voit qu'on a désigné par la référence 1, comme sur la Fig. 1, le corps d'une presse à balles cylindriques supporté par des roues 2, cette presse étant ici encore destinée à être attelée à un tracteur au moyen d'un timon 3.

On a également indiqué en 8 la balle formée par enroulement à l'intérieur de la chambre de la presse, d'une manière en soi classique.

Le bras guide-ficelle 15 est, comme indiqué précédemment, monté de façon à se déplacer par son extrémité libre 15a en un mouvement transversal par rapport à la direction de déplacement de la presse, pour assurer par cet effet de balayage transversal le liage de la balle 8 lorsque la formation de celle-ci est terminée.

Comme décrit également ci-avant, ce bras 15 est relié à un accouplement à effet unidirectionnel 18 conjugué à un bras de déclenchement 14 qui peut être actionné lui-même par un câble 13 quand la balle a atteint son diamètre maximum. Le bras 15 est ici encore soumis à l'effet d'un ressort 17 monté entre ledit bras et un point d'accrochage 38 prévu sur le châssis de la presse. L'accouplement unidirectionnel 18 est entraîné, lors de l'opération de liage, par un axe ou arbre 19.

Suivant le mode de réalisation maintenant considéré, l'entraînement du bras 15 pour son mouvement de balayage transversal afin d'assurer le liage est fourni par un moteur électrique 41 qui entraîne l'arbre 19 constituant l'arbre d'entrée de l'accouplement unidirectionnel 18 par l'intermédiaire d'un réducteur désigné dans son ensemble par la référence 42 sur la Fig. 7.

Comme visible sur la Fig. 8, le réducteur irréversible 42 comprend, dans le mode de réalisation considéré, un arbre d'entrée 43 qui peut être l'arbre de sortie du moteur électrique 41 ou un arbre entraîné directement par celui-ci à grande vitesse, par exemple par l'intermédiaire d'un renvoi conique, cet arbre portant une came 44 logée dans une fente 45 d'un levier 46 monté de façon pivotante sur un arbre 47 qui peut correspondre à l'arbre d'entrée 19 de l'accouplement à effet unidirectionnel ou être relié directement à celui-ci. Un accouplement formant roue-libre 48 est prévu entre le levier 46 et l'arbre 47. Cet arbre 47 est en outre tourillonné dans un support fixe 49 porté par le boîtier du réducteur 42, avec interposition d'un autre accouplement formant roue-libre 50. Les deux accouplements formant roues-libres sont montés dans le même sens de sorte que, lorsque le levier 46 subit un pivotement sous l'effet de la came 44 coopérant avec la fente 45, il entraîne dans un sens de pivotement l'arbre 47 en rotation, tandis qu'il tourne librement sur cet arbre lors de son pivotement dans l'autre sens, tout mouvement de retour de l'arbre 47 étant alors empêché par le second accouplement formant roue-libre 50. Un ripage de l'arbre dans le sens correspondant à ce mouvement de retour est également empêché quand l'arbre 43 est à l'arrêt.

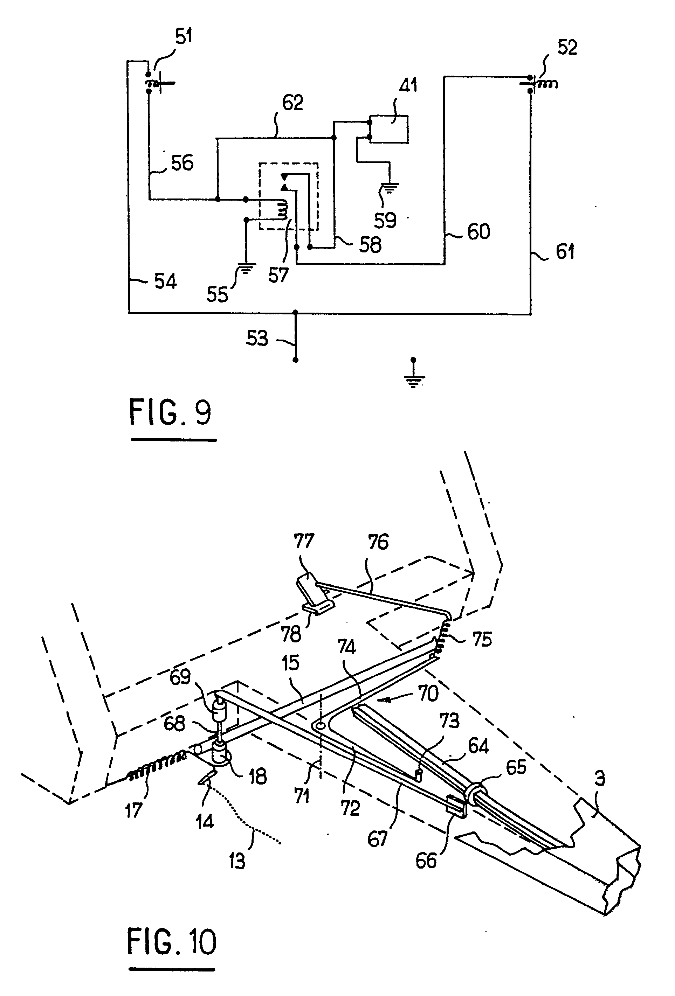

On décrira maintenant en regard de la Fig. 9 un circuit électrique d'alimentation du moteur électrique 41. Il est prévu ici sur la presse, comme visible sur la Fig. 7 un contacteur de mise en circuit 51 qui se trouve à l'opposé de la position de repos du bras guide-ficelle 15 et un contacteur de mise hors circuit 52 qui correspond à cette position de repos, comme visible sur les dessins.

Sur la Fig. 9, on a indiqué schématiquement en 53 l'alimentation électrique, qui peut être fournie par une batterie prévue sur la presse ou bien directement par le circuit électrique du tracteur. Le conducteur d'alimentation 53 est relié par un conducteur 54 à un plot du contacteur 51, dont l'autre plot est mis à la masse en 55 par un conducteur 56, à travers un enroulement de relais 57. Les contacts du relais 57 sont reliés, d'une part, par un conducteur 58 à une borne du moteur 41, dont l'autre borne est mise à la masse en 59, et d'autre part, par un conducteur 60, à un plot du contacteur 52, dont l'autre plot est relié au conducteur d'alimentation 53 par un conducteur 61. Un circuit de réaction est établi par un conducteur 62 entre les conducteurs 56 et 58.

On décrira maintenant le fonctionnement de ce dispositif.

Quand la balle a atteint le diamètre désiré, le câble 13 est actionné par le conducteur du tracteur ou de façon automatique pour déplacer le bras 14 et déverrouiller l'accouplement 18. Le bras guide-ficelle 15 est alors déplacé sous l'effet du ressort 17, depuis la position de repos représentée sur la Fig. 7 jusqu'à sa position de départ, dans laquelle son extrémité libre 15a se trouve du côté opposé de la presse. Quand le bras guide-ficelle 15 quitte le crochet de retenue 63 (Fig. 7), le contacteur d'arrêt 52 se ferme. En arrivant à l'autre extrémité de sa course ou dans sa position de départ, le bras 15 agit sur le contacteur de mise en circuit 51 pour le fermer. Ceci complète un circuit entre l'alimentation 53 et la masse en 55 par le conducteur 54, le conducteur 51, le conducteur 56 et le relais 57. L'excitation du relais 57 ferme ses contacts et établit également un circuit à partir de l'alimentation en 53 jusqu'à la masse en 59 par le conducteur 61, le contacteur fermé 52, le conducteur 60, les contacts fermés du relais 57, le conducteur 58, le moteur 41 et la masse en 59.

Lors de la fermeture du premier circuit mentionné pour le moteur électrique 41, celui-ci est mis en route, ce qui commande un lent mouvement de pivotement du bras guide-ficelle 15 par l'intermédiaire du réducteur 42 décrit précédemment et de l'accouplement à effet unidirectionnel 18, avec le caractère d'irréversibilité fourni par le réducteur.

Quand le bras 15 quitte le contacteur 51, celui-ci s'ouvre. Toutefois, l'alimentation du moteur 41 continue d'être assurée étant donné que l'enroulement 57 du relais est excité par l'intermédiaire du conducteur 62, ce qui maintient ses contacts fermés.

Quand le bras guide-ficelle parvient dans sa position de repos après le liage de la balle, son extrémité 15a agit sur le crochet 63 pour ouvrir le contacteur 52, ce qui supprime l'alimentation du moteur 41 et provoque son arrêt. La condition de la presse illustrée sur la Fig. 7 est rétablie et une nouvelle balle peut être formée, l'opération se répétant lors de son liage.

On a représenté sur la Fig. 10 une variante de réalisation dans laquelle l'entraînement du bras guide-ficelle est assuré à partir de l'arbre de prise de force du tracteur ou d'un arbre relié à celui-ci.

Sur la Fig. 10, on a désigné par les mêmes références que précédemment les éléments de la presse, qui sont représentés simplement de façon schématique. Ainsi, le corps 1 de la presse est prolongé vers l'avant par un timon 3 et supporte un accouplement unidirectionnel 18 dont le bras de déverrouillage 14 peut être actionné par un câble 13, cet accouplement étant relié à un bras guide-ficelle 15 qui est soumis ici encore à l'action d'un ressort 17.

On a indiqué sur la Fig. 10 en 64 un arbre qui est prévu sur la presse et qui est relié cinématiquement à l'arbre de prise de force du tracteur, de sorte qu'il tourne de façon continue. Cet arbre porte une came 65 qui peut coopérer avec une surface de friction 66 portée par un levier 67 monté à pivotement sur un arbre 68 qui constitue également l'arbre d'un réducteur 69 de type équivalent de celui décrit en regard de la Fig. 8 et qui est relié à l'arbre d'entrée de l'accouplement unidirectionnel 18. Ce réducteur comprend, comme précédemment, deux accouplements formant roues-libres montés dans le même sens, afin de fournir le caractère d'irréversibilité désiré pour l'arbre 68.

Un levier coudé désigné par 70 est monté à pivotement sur la presse autour d'un axe ou pivot 71. Ce levier comprend un premier bras 72 muni d'une butée 73 qui peut s'appliquer contre le levier 67 pour maintenir la surface de friction 66 à l'écart de la came 65. Le levier 70 comprend également un second bras 74 qui est relié à un ressort 75 raccordé par son autre extrémité à une tige 76 actionnant un couteau 77 coopérant avec une enclume 78.

Le fonctionnement de cette variante de réalisation est le suivant :

Dans la condition de repos représentée sur la Fig. 10, le bras 15 agit par son extrémité sur le ressort 75 ce qui, d'une part, provoque le pivotement du levier 70 dans le sens horaire autour de son axe 71, de sorte que la butée 73 agit sur le levier 67 pour écarter la surface de friction 66 de la came 65. On évite de cette manière toute action sur le bras à partir de l'arbre 64, qui tourne en permanence avec l'arbre de prise de force du tracteur.

D'autre part, le ressort 75 agit sur la tige 76 pour maintenir en position de fermeture le couteau 77 retenant l'extrémité de la ficelle, d'une manière en soi classique.

Quand la balle a atteint le diamètre désiré, le câble 13 provoque, par l'intermédiaire du bras 14, le déverrouillage de l'accouplement 18, ce qui libère le bras guide-ficelle 15 et permet au ressort 17 d'amener ce bras dans sa position de départ, dans laquelle son extrémité libre se trouve d'u côté opposé de la presse. Quand le bras 15 s'écarte du ressort 75, celui-ci agit pour faire pivoter le levier 70 dans le sens anti-horaire autour de l'axe 71, de sorte que la butée 73 s'écarte du levier 67, la surface de friction 66 venant alors s'appliquer contre la came 65. En outre, le ressort 75 libère également la tige 76, ce qui assure l'ouverture du couteau 77 pour permettre l'échappement de l'extrémité de la ficelle.

Sous l'effet de la came 65, le levier 67 subit un pivotement en va-et-vient de faible amplitude grâce à un ressort de rappel (non représenté). A chaque pivotement dans un sens de ce levier 67, le premier accouplement formant roue-libre du réducteur 69 agit pour faire tourner l'arbre 68, et cet arbre est immobilisé par le second accouplement formant roue-libre de ce réducteur lors du mouvement de retour du levier 67. Le bras 15 est ainsi déplacé en un lent mouvement de pivotement par l'accouplement unidirectionnel 18, pour fournir le balayage transversal nécessaire au liage.

Quand le bras 15 parvient à l'extrémité de sa course, il agit sur le ressort 75 pour faire pivoter le levier coudé 70 et écarter la surface de friction 66 de la came 65 et pour fermer le couteau 77, ce qui coupe la ficelle et retient son extrémité.

## Revendications

1. Dispositif de liage pour presses à balles cylindriques, du type comprenant un bras guide-ficelle (15) monté de façon pivotante sur la presse de façon à pouvoir effectuer un mouvement de balayage devant l'orifice d'entrée (5) des produits de récolte dans la presse, ce bras étant alimenté en ficelle (22) à partir d'une réserve de ficelle et guidant celle-ci jusque devant cet orifice d'entrée, ledit bras étant retenu en position de repos pendant la formation de la balle (8) dans la chambre de la presse et étant soumis à l'action d'un organe élastique (17) de rappel en position de départ par un mouvement rapide lors du déclenchement de l'opération de liage, des organes d'entraînement (19-21 ; 41, 42 ; 68, 69) étant prévus pour déplacer ce bras en un lent mouvement de balayage transversal devant cet orifice d'entrée pour la course de liage, des moyens assurant l'actionnement et l'arrêt de ces organes d'entraînement, caractérisé en ce que ce bras (15, 16) est relié par un accouplement à effet unidirectionnel débrayable (18) à ces organes d'entraînement (19-21 ; 41, 42 ; 68, 69), qui sont irréversibles, le maintien dudit bras en position de repos en fin de course étant assuré par l'irréversibilité desdits organes d'entraînement, tandis que le déclenchement du mouvement rapide du bras de sa position de repos à sa position de départ est provoqué par l'actionnement d'un organe de débrayage ou de déverrouillage (14) de l'accouplement débrayable.

2. Dispositif de liage suivant la revendication 1, caractérisé en ce que l'accouplement à effet unidirectionnel est constitué par un moyeu débrayable (18).

3. Dispositif de liage suivant la revendication 2, caractérisé en ce que le moyeu débrayable (18) est combiné à l'organe de déverrouillage (14) et en ce que des moyens (13) sont prévus pour relier cet organe de déverrouillage à un organe détecteur (12) actionné quand la formation de la balle cylindrique est en principe terminée, pour déverrouiller ce moyeu débrayable et permettre le rappel rapide du bras (15, 16) à sa position de départ.

4. Dispositif de liage suivant la revendication 3, caractérisé en ce que ce moyeu débrayable (18) comprend un corps (30) relié au bras guide-ficelle (15, 16), dans lequel est tourillonné l'arbre (19) d'entraînement du bras (15, 16) et renfermant un premier accouplement comprenant des galets ou rouleaux (33) retenus dans une cage (34) entre ce corps (30) et une partie non circulaire (32) de l'arbre, et une roue libre (34-37) dont un élément (35) est relié rigidement à l'organe de déverrouillage (14), la cage du premier accouplement étant solidaire de l'autre élément (34) de la roue libre et pouvant se déplacer angulairement sous l'action de l'organe de verrouillage (14) pour libérer les galets ou rouleaux (33) de la partie non circulaire de l'arbre (19).

5. Dispositif de liage suivant la revendication 2, caractérisé en ce que le moyeu débrayable (18) comprend l'organe de déverrouillage (14) qui peut être actionné manuellement.

6. Dispositif de liage suivant l'une quelconque des revendications précédentes, caractérisé en ce que les organes d'entraînement sont constitués par un mécanisme tel qu'un réducteur (20) comprenant un arbre d'entrée et un arbre de sortie (19) relié à l'accouplement (18), cet arbre d'entrée portant une poulie (21) ou un organe analogue sur lequel est enroulée la ficelle (22) destinée au liage, entre la boîte à ficelle servant de réserve et le bras guide-ficelle (15, 16).

7. Dispositif de liage pour presses à balles cylindriques suivant la revendication 1, caractérisé en ce que ces organes d'entraînement comprennent, en combinaison, un moteur électrique (41) et un réducteur de type irréversible (42) interposé entre ce moteur électrique (41) et cet accouplement unidirectionnel (18).

8. Dispositif de liage suivant la revendication 7, caractérisé en ce que le réducteur (42) comprend, sur l'arbre de sortie (43) du moteur électrique (41) ou sur un arbre entraîné par celui-ci, une came (44) attaquant un levier (46) monté à rotation sur l'arbre (47) du réducteur avec interposition d'un premier accouplement formant roue-libre (48), cet arbre étant tourillonné dans un support fixe (49) avec interposition d'un second accouplement formant roue-libre (50) assurant un blocage dans le même sens que le premier accouplement, de telle sorte que le déplacement par pivotement en va-et-vient du levier sous l'effet de la came provoque un entraînement pas à pas à faible vitesse de l'arbre du réducteur, toute rotation en arrière de cet arbre étant empêchée par le second accouplement lors du mouvement de retour du levier.

9. Dispositif de liage suivant la revendication 7 ou 8, suivant lequel un circuit électrique est prévu pour l'alimentation du moteur électrique à partir d'une source d'énergie électrique, caractérisé en ce qu'il comprend un contacteur de mise en circuit (51) interposé dans la trajectoire du bras guide-ficelle (15) et actionné par ce bras quand celui-ci parvient dans sa position de départ après avoir été libéré, ce contacteur étant monté dans le circuit d'un relais (57) dont les contacts sont intercalés dans le circuit d'alimentation du moteur électrique (41), et un contacteur de mise hors circuit (52) également interposé dans la trajectoire du bras guide-ficelle (15), prévu au voisinage de la position de repos de ce bras et actionné quand ledit bras parvient dans cette position de repos pour ouvrir le circuit d'alimentation du moteur électrique.

10. Dispositif de liage pour presses à balles cylindriques suivant la revendication 1, caractérisé en ce que ces organes d'entraînement comprennent un arbre (64) relié cinématiquemnt à l'arbre de prise de force du tracteur auquel la presse est attelée ou cet arbre de prise de force lui-même, un réducteur de type irréversible (69) monté entre cet arbre (64) et cet accouplement à effet unidirectionnel (18) et des moyens pour désaccoupler ce réducteur de cet arbre quand le bras guide-ficelle (15) se trouve en position de repos.

11. Dispositif de liage suivant la revendication 10, caractérisé en ce qu'il est prévu une came (65) montée sur cet arbre (64), un levier (67) monté de façon pivotante sur l'arbre (68) du réducteur (69) par l'intermédiaire d'un premier accouplement formant roue-libre, cet arbre du réducteur étant tourillonné dans un support fixe avec interposition d'un second accouplement formant roue-libre monté dans le même sens que le premier accouplement, afin que le pivotement du levier sous l'effet de la came (65) provoque par l'intermédiaire du premier accouplement un lent mouvement de rotation pas à pas de l'arbre (68), toute rotation en sens opposé étant empêchée par le second accouplement lors du mouvement de retour du levier, cet arbre (68) du réducteur constituant l'arbre d'entrée de l'accouplement à effet unidirectionnel (18) ou étant relié à cet arbre d'entrée.

12. Dispositif de liage suivant la revendication 11, caractérisé en ce que le levier pivotant (67) porte une surface de friction (66) qui est appliquée contre la came (65) pour l'actionnemnet du levier.

13. Dispositif de liage suivant la revendication 11 ou 12, caractérisé en ce qu'il comporte un organe de désaccouplement (70) muni d'une butée (73), monté entre la position de repos du bras guide-ficelle (15) et ce levier (67), et un organe élastique (75) agissant pour écarter cet organe de désaccouplement dudit levier afin de permettre l'application de ce dernier contre cette came (65), cet organe de désaccouplement étant amené en position de butée contre ledit levier pour l'écarter de la came sous l'effet du bras guide-ficelle (15) en position de repos.

14. Dispositif de liage suivant la revendication 13, caractérisé en ce que cet organe de désaccouplement est constitué par un levier coudé (70) monté à pivotement sur la presse, dont un bras (72) porte une butée (73) attaquant le levier (67), tandis que son autre bras (74) est relié à cet organe élastique (75) et peut être déplacé par le bras guide-ficelle (15) en position de repos.

15. Dispositif de liage suivant l'une quelconque des revendications précédentes, caractérisé en ce qu'il est prévu, vers l'extrémité de l'orifice (5) d'entrée des produits de récolte dans la presse correspondant à la position de repos du bras guide-ficelle (15, 16), une portée (23) sur laquelle peut s'appliquer un couteau (24) destiné à sectionner et à retenir l'extrémité correspondante de la ficelle (22), ce couteau étant actionné par le bras porte-ficelle (15, 16) quand celui-ci arrive sensiblement en fin de course.

16. Dispositif de liage suivant la revendication 15, caractérisé en ce que le couteau (24) est relié par une tringle d'accouplement (27) ou un élément analogue à un levier (28) interposé dans le trajet du bras guide-ficelle (15, 16).

17. Presses à balles cylindriques équipées d'un dispositif de liage suivant l'une quelconque des revendications précédentes.

**Claims**

1. A binding apparatus for round bale presses, of the type comprising a twine guide arm (15) mounted pivotally on the press so as to be able to perform a sweep movement in front of the intake opening (5) for the crop products to pass into the press, said arm being supplied with twine (22) from a twine store and guiding the twine to a position in front of said intake opening, said arm being retained in a rest position during the operation of forming the bale (8) in the chamber of the press and being subjected to the action of a resilient return member (17) for return to the starting position by a rapid movement when the binding operation is initiated, entrainment members (19-21 ; 41, 42 ; 68, 69) being provided to displace said arm with a slow transverse sweep movement in front of said intake opening for the binding travel, means providing for actuating and stopping said entrainment members, characterised in that said arm (15, 16) is connected by a disengageable unidirectional-action coupling means (18) to said entrainment members (19-21 ; 41, 42 ; 68, 69) which are irreversible, said arm being maintained in the rest position at the end of its travel by means of the irreversibility of said entrainment members while triggering of the rapid movement of the arm from its rest position to its starting position is caused by actuation of a disengagement or unlocking member (14) of the disengageable coupling means.

2. A binding apparatus according to claim 1, characterised in that the unidirectional-action coupling means comprises a disengageable hub (18).

3. A binding apparatus according to claim 2, characterised in that the disengageable hub (18) is combined with the unlocking member (14) and that means (13) are provided for connecting said unlocking member to a detector member (12) which is actuated when the operation of forming the round bale is in principle concluded to unlock said disengageable hub and to permit the rapid return movement of the arm (15, 16) to its starting position.

4. A binding apparatus according to claim 3, characterised in that said disengageable hub (18) comprises a body (30) connected to the twine guide arm (15, 16), in which the shaft (19) for entrainment of the arm (15, 16) is journalled, and containing a first coupling means comprising rollers or runners (33) which are retained in a cage (34) between said body (30) and a non-circular portion (32) of the shaft, and a free wheel means (34-37) of which one element (35) is rigidly connected to the unlocking member (14), the cage of the first coupling means being fixed with respect to the other element (34) of the freewheel means and being capable of angular displacement under the action of the unlocking member (14) to free the rollers or runners (33) from the non-circular portion of the shaft (19).

5. A binding apparatus according to claim 2, characterised in that the disengageable hub (18) comprises the unlocking member (14) which may be manually actuated.

6. A binding apparatus according to any one of the preceding claims, characterised in that the entrainment members comprise a mechanism such as a reducing device (20) comprising an input shaft and an output shaft (19) which is connected to the coupling means (18), said input shaft carrying a pulley (21) or like member around which is passed the twine (22) intended for binding the bale, between the twine box which serves as a twine store and the twine guide arm (15, 16).

7. A binding apparatus for round bale presses according to claim 1, characterised in that said entrainment members comprise, in combination, an electric motor (41) and an irreversible-type reducing device (42) interposed between said electric motor (41) and said unidirectional coupling means (18).

8. A binding apparatus according to claim 7, characterised in that the reducing device comprises, on the output shaft (43) of the electric motor (41) or on a shaft driven thereby, a cam (44) engaging a lever (46) rotatably mounted on the shaft (47) of the reducing device, with the interposition of a first coupling means (48) forming a freewheel means, said shaft being journalled in a fixed support (49) with the interposition of a second coupling means (50) forming a freewheel means, providing a blocking action in the same direction as the first coupling means, such that displacement of the lever with a reciprocal pivotal movement under the action of the cam causes low-speed stepping drive of the shaft of the reducing device, any reverse rotation of said shaft being prevented by the second coupling means, during the return movement of the lever.

9. A binding apparatus according to claim 7 or claim 8, wherein an electrical circuit is provided for supplying the electric motor from an electrical power source characterised in that it comprises an on switch (51) which is interposed in the path of movement of the twine guide arm (15) and which is actuated by said arm when said arm moves into its starting position after having been released, said switch (51) being mounted in the circuit of a relay (57) whose contacts are disposed in the power supply circuit of the electric motor (41), and an off switch (52) which is also interposed in the path of movement of the twine guide arm (15), in the vicinity of the rest position of said arm and which is actuated when said arm reaches said rest position to open the electric motor power supply circuit.

10. A binding apparatus for round bale presses according to claim 1, characterised in that said entrainment members comprise a shaft (64) which is kinematically connected to the power take-off shaft of the tractor to which the press is coupled or said power take-off shaft itself, an irreversible-type reducing device (69) mounted between said shaft (64) and said unidirectional-action coupling means (18), and means for uncoupling said reducing device from said shaft when the twine guide arm (15) is in the rest position.

11. A binding apparatus according to claim 10, characterised in that there is provided a cam (65) which is mounted on said shaft (64), a lever (67) mounted pivotally on the shaft (68) of the reducing device (69) by way of a first coupling means forming a freewheel means, said shaft of the reducing device being journalled in a fixed support with the interposition of a second coupling means forming a freewheel means which is mounted in the same direction as the first coupling means so that the pivotal movement of the lever under the action of the cam (65), by way of the first coupling means, causes a slow stepping rotary movement of the shaft (68), any rotary movement in the opposite direction being prevented by the second coupling means in the return movement of the lever, said shaft (68) of the reducing device forming the input shaft of the unidirectional-action coupling means (18) or being connected to said input shaft.

12. A binding apparatus according to claim 11, characterised in that the pivotal lever (67) carries a friction surface (66) which is applied against the cam (65) for actuation of the lever.

13. A binding apparatus according to claim 11 or claim 12, characterised in that it comprises an uncoupling member (70) provided with an abutment (73) and mounted between the rest position of the twine guide arm (15) and said lever (67), and a resilient member (75) operative to move said uncoupling member away from said lever in order to permit the latter to be applied against said cam (65), said uncoupling member being moved into a position of abutment against said lever to move it away from the cam under the action of the twine guide arm (15) in the rest position.

14. A binding apparatus according to claim 13, characterised in that said uncoupling member comprises a bell crank lever (70) which is pivotally mounted on the press and having an arm (72) which carries an abutment (73) for engaging the lever (67) while its other arm (74) is connected to said resilient member (75) and can be displaced by the twine guide arm (15) in the rest position.

15. A binding apparatus according to any one of the preceding claims, characterised in that, towards the end of the opening (5) for the intake of crop products into the press, corresponding to the rest position of the twine guide arm (15, 16), there is provided a bearing member (23) against which can be applied a knife (24) for cutting and retaining the corresponding end of the twine (22), said knife being actuated by the twine guide arm (15, 16) when the arm arrives substantially at the end of its travel.

16. A binding apparatus according to claim 15, characterised in that the knife (24) is connected by a coupling rod (27) or like element to a lever (28) which is interposed in the path of movement of the twine guide arm (15, 16).

17. Round bale presses provided with a binding apparatus according to any one of the preceding claims.

## Patentansprüche

1. Bindevorrichtung für Pressen zum Herstellen von zylindrischen Ballen, des Typs, welcher einen Garnführungsarm (15), der schwenkbar auf der Presse in der Weise montiert ist, um eine hin- und hergehende Bewegung vor der Eintrittsöffnung (5) der Ernteprodukte in die Presse ausführen zu können, wobei der Arm mit einem Garn (22) von einem Garnvorrat aus gespeist und das Garn von diesem bis vor die Eintrittsöffnung geführt wird, wobei der genannte Arm in einer Ruhestellung während der Bildung des Ballens (8) in der Kammer der Presse gehalten und der Wirkung eines elastischen Organs (17) zum zürückführen in die Ausgangsstellung durch eine rasche Bewegung unterworfen ist während der Auslösung des Bindevorgangs, Mitnehmerorgane (19-21 ; 41, 42 ; 68, 69) die vorgesehen sind, um diesen Arm in einer langsamen, quer verlaufenden Streichbewegung vor der Eintrittsöffnung für den Bindevorgang zu verstellen, und Mittel zum Sicherstellen der Wirksamkeit und des Stillstandes dieser Mitnehmerorgane umfasst, dadurch gekennzeichnet, dass der Arm (15, 16) durch eine Kupplungseinrichtung (18) mit in einer Richtung wirksamer Kupplungswirkung mit diesen Mitnehmerorganen (19-21 ; 41, 42 ; 68, 69) verbunden ist, die irreversibel sind, das Halten des besagten Armes in der Ruhestellung am Ende des Vorganges durch die Irreversibilität der genannten Mitnehmerorgane sichergestellt ist, während die Auslösung der raschen Bewegung des Armes von seiner Ruhestellung in die Ausgangsstellung durch Betätigung eines Auslöse- oder Entriegelungsorgans (14) der lösbaren Kupplungseinrichtung hervorgerufen wird.

2. Bindevorrichtung nach Anspruch 1, dadurch gekennzeichnet, dass die Kupplungseinrichtung mit Wirkung in nur einer Richtung durch eine Kupplungsnabe (18) gebildet ist.

3. Bindevorrichtung nach Anspruch 2, dadurch gekennzeichnet, dass die Kupplungsnabe (18) mit einem Entriegelungsorgan (14) kombiniert ist und dass Mittel (13) vorgesehen sind, um dieses Entriegelungsorgan mit einem Fühlerorgan (12) zu verbinden, welches betätigt wird, wenn die Bildung des zylindrischen Ballens prinzipiell beendet ist, um diese Kupplungsnabe zu entriegeln und die rasche Zurückführung des Armes (15, 16) in seine Ausgangsstellung zu gestatten.

4. Bindevorrichtung nach Anspruch 3, dadurch gekennzeichnet, dass die Kupplungsnabe (18) einen Körper (30), der mit dem Garnführungsarm (15, 16) verbunden ist, in welchem die Welle (19) zum Antrieb des Armes (15, 16) drehbar ist und welche eine erste Kupplungseinrichtung enthält, die Rollkörper oder Rollen (33) umfassen, die in einem Käfig (34) zwischen dem Körper (30) und einem nicht kreisförmigen Teil (32) der Welle zurückgehalten sind, und einen Freilauf (34 bis 37) umfasst, von dem ein Element (35) starr mit einem Entriegelungsorgan (14) verbunden ist, wobei der Käfig der ersten Kupplungseinrichtung formschlüssig mit dem anderen Element (34) des Freilaufs verbunden ist und sich unter der Wirkung des Verriegelungsorganes (14) winkelmässig verstellen kann, um die Rollkörper oder Rollen (33) des nicht kreisförmigen Bereiches der Welle (19) freizusetzen.

5. Bindevorrichtung nach Anspruch, dadurch gekennzeichnet, dass die Kupplungsnabe (18) das Entriegelungsorgan (14) umfasst, das mittels Hand betätigt werden kann.

6. Bindevorrichtung nach irgendeinem der voranstehenden Ansprüche, dadurch gekennzeichnet, dass die Mitnehmerorgane durch einen Mechanismus wie eine Reduziereinrichtung (20) gebildet sind, welcher eine Eingangswelle und eine Ausgangswelle (19), die mit der Kupplungseinrichtung (18) verbunden ist, umfasst, wobei die Eingangswelle eine Riemenscheibe (21) oder ein analoges Organ trägt, über das das Garn (22), das zum Binden bestimmt ist, geführt ist, und zwar zwischen dem Garnkasten, der als Reserve dient, und dem Garnführungsarm (15, 16).

7. Bindevorrichtung für Pressen zum Herstellen von zylindrischen Ballen nach Anspruch 1, dadurch gekennzeichnet, dass die mitnehmerorgane in Kombination einen elektrischen Motor (41) und eine Reduziereinrichtung von nicht umkehrbarem Typ (42) umfassen, die zwischen dem elektrischen Motor (41) und der nur in einer Richtung wirkenden kupplungseinrichtung (18) angeordnet ist.

8. Bindevorrichtung nach Anspruch 7, dadurch gekennzeichnet, dass die Reduziereinrichtung (42) auf der Ausgangswelle (43) des elektrischen motors (41) oder auf einer davon angetriebenen Welle einen Nocken (44) aufweist, der auf einen Hebel (46) einwirkt, der drehbar auf der Welle (47) der Reduziereinrichtung unter Zwischenschaltung einer ersten Kupplungseinrichtung montiert ist, welche eine Freilauf (48) bildet, wobei diese Welle in einer festen Stützeinrichtung (49) unter Zwischenschaltung einer zweiten Kupplungseinrichtung in Form eines Freilaufs (50) drehbar ist, welche eine Blockierung im gleichen Sinne wie die erste Kupplungseinrichtung sicherstellt, derart, das die Verstellung durch ein Hin- und Herschwenken des Hebels unter der Wirkung des Nockens eine schrittweise Mitnahme in geringer Geschwindigkeit der Welle der Reduziereinrichtung hervorruft, wobei jede Drehbewegung nach rückwärts dieser Welle durch die zweite Kupplungseinrichtung während der Rückführungsbewegung des Hebels verhindert wird.

9. Bindevorrichtung nach Anspruch 7 oder 8, gemäss der ein elektrischen Kreis zur Speisung des elektrischen Motors von einer elektrischen Energiequelle vorgesehen ist, dadurch gekennzeichnet, dass diese eine Einschaltkontakteinrichtung (51), die in der Bahn des Garnführungsarmes (15) angeordnet ist und durch diesen Arm betätigt wird, wenn dieser in die Ausgangsstellung gelangt, nachdem dieser freigegeben worden ist, wobei die Kontakteinrichtung in den Kreis eines Relais (57) montiert ist, dessen Kontakte in dem Speisekreis des elektrischen Motors (41) eingeschaltet sind, und eine Ausschaltkontakteinrichtung (52) aufweist, die ebenfalls in der Bahn des Garnführungsarmes (15) angeordnet ist und in der Nähe der Ruhestellung des Armes vorgesehen ist und betätigt wird, wenn der genannte Arm in diese Ruhestellung gelangt, um den Speisekreis für den elektrischen Motor zu öffnen.

10. Bindevorrichtung für Pressen zum Herstellen von zylindrischen Ballen nach Anspruch 1, dadurch gekennzeichnet, dass die Mitnehmerorgane eine Welle (64), welche kinematisch mit dem Zapfwellenantrieb der Zugmaschine verbunden ist, an die die Presse angehängt ist, oder den Zapfwellenantrieb selbst, eine Reduziereinrichtung von irreversiblem Typ (69), die zwischen der Welle (64) und der nur in einer Richtung wirkenden Kupplungseinrichtung (18) vorgesehen ist, und Mittel umfassen, um die Reduziereinrichtung von dieser Welle abzukuppeln, wenn der Garnführungsarm (15) sich in der Ruhestellung befindet.

11. Bindevorrichtung nach Anspruch 10, dadurch gekennzeichnet, dass ein Nocken (65), der auf dieser Welle (64) montiert ist, und ein Hebel (67) vorgesehen sind der schwenkbar auf der Welle (68) der Reduziereinrichtung (69) unter Zwischenschaltung einer ersten Kupplungseinrichtung montiert ist, die einen Freilauf bildet, wobei die Welle der Reduziereinrichtung in einem festen Tragteil drehbar ist, unter Zwischenschaltung einer zweiten Kupplungseinrichtung die einen Freilauf bildet, welche im gleichen Sinne wie die erste Kupplungseinrichtung montiert ist derart, dass die Schwenkbewegung des Hebels unter der Wirkung des Nockens (65) mit Hilfe der ersten Kupplungseinrichtung eine langsame Drehbewegung Schritt für Schritt der Welle (68) hervorruft, wobei die gesamte Drehung im entgegengesetzten Sinne durch die zweite Kupplungseinrichtung während der Rückbewegung des Hebels verhindert wird, wobei die Welle (68) der Reduziereinrichtung die Eingangswelle der Kupplungseinrichtung mit Wirkung nur in einer Richtung (18) bildet oder mit dieser Eingangswelle verbunden ist.

12. Bindevorrichtung nach Anspruch 11, dadurch gekennzeichnet, dass der Schwenkhebel (67) eine Reibungsfläche (66) trägt, die gegen den Nocken (65) anliegt, um den Hebel zu betätigen.

13. Bindevorrichtung nach Anspruch 11 oder 12, dadurch gekennzeichnet, dass sie ein Entkupplungsorgan (70), das mit einem Anschlag (73) ausgerüstet ist und zwischen der Ruhestellung des Garnführungsarmes (15) und dem Hebel (67) angeordnet ist, und ein elastisches Organ (75) umfasst, das wirksam ist, um das Entkupplungsorgan des besagten Hebels zu entfernen und die Anlage gegen diesen Nocken (65) zu gestatten, wobei das Entkupplungsorgan in die Anschlagstellung gegen den genannten Hebel zum Trennen des Nockens unter der Wirkung des Garnführungsarmes (15) in der Ruhestellung gebracht wird.

14. Bindevorrichtung nach Anspruch 13, dadurch gekennzeichnet, dass das Entkupplungsorgan durch einen gekrümmten Hebel (70) gebildet ist, der schwenkbar auf der Presse gelagert ist, dessen einer Arm (72) einen Anschlag (73) trägt, der auf den Hebel (67) einwirkt, während sein anderer Arm (74) mit dem elastischen Organ (75) verbunden ist und durch den Garnführungsarm (15) in die Ruhestellung verstellt werden kann.

15. Bindevorrichtung nach irgendeinem der voranstehenden Ansprüche, dadurch gekennzeichnet, dass zu dem Ende der Eintrittsöffnung (5) für die Ernteprodukte in die Presse, welches der Ruhestellung des Garnführungsarmes (15, 16) entspricht, eine Widerlagerfläche (23) vorgesehen ist, auf die ein Messer (24) einwirken kann das dazu bestimmt ist, das korrespondierende Ende des Garnes (22) zu zerschneiden und festzuhalten, wobei das Messer durch den Garntragarm (15, 16) betätigt wird, während dieser im wesentlichen das Ende seiner Bahn erreicht.

16. Bindevorrichtung nach Anspruch 15, dadurch gekennzeichnet, das das Messer (24) durch ein Kupplungsgestänge (27) oder ein analoges Element mit einem Hebel (28) verbunden ist, der in der Bahn des Garnführungsarmes (15, 16) angeordnet ist.

17. Pressen für zylindrische Ballen, die mit einer Bindevorrichtung gemäss irgendeinem der voranstehenden Ansprüche ausgerüstet sind.

FIG. 1

FIG. 2

FIG. 3

FIG. 4

FIG. 5

FIG. 6

4

FIG.7

FIG. 8

5

FIG. 9

FIG. 10

6